# EUROPÄISCHE PATENTSCHRIFT

(11) **EP 3 003 931 B1**
(45) Veröffentlichungstag und Bekanntmachung des Hinweises auf die Patenterteilung: **17.11.2021**
(21) Anmeldenummer: 14727544.0
(22) Anmeldetag: 03.06.2014
(51) Int. Cl.: B65G 54/02

(54) **VORRICHTUNG ZUM TRANSPORTIEREN VON BEHÄLTNISSEN MIT MAGNETISCHEM ANTRIEB**
DEVICE FOR TRANSPORTING CONTAINERS WITH A MAGNETIC DRIVE
DISPOSITIF DE TRANSPORT DE RÉCIPIENTS ÉQUIPÉ D'UN MÉCANISME D'ENTRAÎNEMENT MAGNÉTIQUE

(30) Priorität: 03.06.2013 DE 102013105687
(43) Veröffentlichungstag der Anmeldung: 13.04.2016
(73) Patentinhaber: Krones AG, 93073 Neutraubling (DE)
(72) Erfinder: UNTERSEHER, Josef, 93073 Neutraubling (DE)
(74) Vertreter: Bittner, Bernhard
(86) Internationale Anmeldenummer: PCT/EP2014/061436
(87) Internationale Veröffentlichungsnummer: WO 2014/195286

(56) Entgegenhaltungen:
- EP-A1- 1 167 248
- EP-A2- 2 511 205
- DE-A1-102010 018 153
- JP-A- H0 654 403
- JP-A- H09 283 591
- US-B1- 6 459 061

## Beschreibung

Die vorliegende Erfindung bezieht sich auf eine Vorrichtung und ein Verfahren zum Transportieren von Behältnissen. Derartige Vorrichtungen und Verfahren sind aus dem Stand der Technik seit langem bekannt und dienen beispielsweise dazu, Behältnisse im Rahmen ihrer Herstellung von einer ersten Behandlungsstation, wie beispielsweise einer Blasformmaschine, zu einer weiteren Behandlungsstation, wie etwa einem Füller, zu transportieren. Üblicherweise handelt es sich hierbei um Sternräder oder dergleichen, an denen eine Vielzahl von Halteelementen zum Halten der Behältnisse angeordnet ist und welche damit diese Behältnisse entlang eines vorgegebenen Transportpfades transportieren. Daneben sind auch Kettenförderer bekannt, welche an einer Kette die besagten Halteelemente zum Halten der Behältnisse aufweisen. Diese Transporteinrichtungen haben den Nachteil, dass die Teilung der einzelnen Halteelemente festgelegt ist und nicht variiert werden kann. Daneben erlauben diese Vorrichtungen auch keine variable Transportgeschwindigkeit einzelner Haltelemente.

Aus dem Stand der Technik sind auch Transporteinrichtungen bekannt, bei denen für die Bewegung der Transportelemente das Prinzip eines Linearmotors verwendet wird. Derartige Vorrichtungen weisen dabei üblicherweise eine Vielzahl von stationär angeordneten Elektromagneten auf, sowie hier gegenüber bewegliche Transportelemente, welche ebenfalls magnetische Mittel, wie beispielsweise Permanentmagneten, aufweisen können. Bei derartigen Vorrichtungen tritt jedoch das Problem auf, dass die Transportelemente rein passive Elemente sind, welche an den Behältnissen keine Bearbeitungsvorgänge durchführen können. Oftmals wäre es jedoch wünschenswert, auch während des Transportes der einzelnen Behältnisse bestimmte Behandlungsvorgänge durchzuführen, wie beispielsweise Sterilisationsvorgänge, Beaufschlagungsvorgänge, Inspektionsvorgänge oder auch nur ein Öffnen und Schließen der Halteelemente, um eine Übergabe an weitere Transporteinrichtungen zu ermöglichen. Dies hat sich jedoch bislang als schwierig erwiesen, da auch die Fortbewegung bzw. der Antrieb für die Fortbewegung durch Magnetkräfte erfolgt und eine entsprechende Energieübertragung für derartige auf den Transportelementen angeordnete Antriebe schwierig zu bewerkstelligen ist. Das Dokument DE 10 2010 018153 A1 offenbart eine Vorrichtung zum Transportieren von Behältnissen mit einer Transportbahn und mindestens einem Transportelement, welches bezüglich dieser Transportbahn beweglich angeordnet ist, wobei dieses Transportelement zumindest teilweise mittels einer magnetischen Kraft antreibbar ist, wobei die Transportbahn eine Vielzahl von magnetischen Elementen, welche wenigstens teilweise Elektromagneten sind, aufweist und an dem Transportelement ebenfalls wenigstens ein magnetisierbares Element angeordnet ist, und wobei durch eine Ansteuerung der magnetischen Elemente der Transportbahn eine Fortbewegung des Transportelements gegenüber der Transportbahn erreichbar ist, wobei die zu transportierenden Behältnisse Kunststoffflaschen oder Kunststoffvorformlinge sind, wobei die Bewegung wenigstens eines Transportelements unabhängig von der Bewegung wenigstens eines zweiten Transportelements gesteuert wird, wobei die Transportelemente jeweils magnetische Elemente aufweisen, die zur Erreichung der Bewegung der Transportelemente in ihrer Gesamtheit dienen, wobei die einzelnen Transportelemente einen Träger sowie ein daran angeordnetes Halteelement zum Halten der Kunststoffbehältnisse aufweisen und die Vorrichtung eine Steuerungseinrichtung aufweist, welche die magnetischen Elemente mit einer Bewegungserzeugungsspannung versorgt, durch welche eine Bewegung der Transportelemente verursacht wird. Das genannte Dokument offenbart auch ein entsprechendes Verfahren zum Transportieren von Kunststoffflaschen oder Kunststoffvorformlingen mittels der oben genannten Vorrichtung.

Der vorliegenden Erfindung liegt die Aufgabe zugrunde, eine auf Magnetkräften basierende Transporteinrichtung zum Transportieren von Behältnissen zur Verfügung zu stellen, welche auch eine Möglichkeit schafft, auf diesen Transportelementen elektrisch betriebene Arbeitselemente anzuordnen. Dies wird erfindungsgemäß durch eine Vorrichtung und ein Verfahren nach den unabhängigen Ansprüchen erreicht. Vorteilhafte Ausführungsformen und Weiterbildungen sind Gegenstand der Unteransprüche.

Eine erfindungsgemäße Vorrichtung zum Transportieren von Behältnissen nach Anspruch 1 weist eine umlaufende oder auch nicht umlaufende Transportbahn auf und mindestens ein Transportelement, welches bezüglich dieser Transportbahn beweglich angeordnet ist. Dabei ist dieses Transportelement zumindest teilweise mittels einer magnetischen Kraft antreibbar. Weiterhin weist die Transportbahn eine Vielzahl von magnetischen Elementen auf und an dem Transportelement ist ebenfalls wenigstens ein magnetisierbares Element angeordnet. Weiterhin ist durch eine Ansteuerung der magnetischen Elemente (der Transportbahn und/oder des Transportelementes) eine Fortbewegung des Transportelementes gegenüber der Transportbahn erreichbar. Bei einer bevorzugten Ausführungsform kann es sich bei der Transportbahn um eine umlaufende Transportbahn handeln.

Erfindungsgemäß ist an dem Transportelement ein elektrisch betriebenes Arbeitselement (im Folgenden auch als elektrisch betriebene Antriebseinrichtung bezeichnet) angeordnet, welches induktiv mit elektrischer Energie versorgbar ist. Es wird daher vorgeschlagen, dass ein Transportelement und insbesondere eine Vielzahl von Transportelementen vorgesehen ist, welche gegenüber der Transportbahn durch Magnetkräfte bewegbar sind, wobei an wenigstens einem dieser Transportelemente die besagte Antriebseinrichtung bzw. das Arbeitselement vorgesehen ist, welche ebenfalls bevorzugt induktiv mit Strom versorgt wird.

Bei diesem Arbeitselement bzw. dieser Antriebseinrichtung handelt es sich um eine Ansteuerung, die das Halteelement ansteuert, um so ein Halten oder Loslassen des Behältnisses zu bewirken. So können beispielsweise die Halteelemente sowohl als aktive als auch als passive Halteelemente ausgebildet sein, d.h. ein Lösen oder Halten des Behältnisses kann auch aktiv, beispielsweise durch Magnetkräfte, erfolgen. Unter einer elektrischen Antriebseinrichtung wird eine Antriebseinrichtung verstanden, die aus einer Gruppe von Arbeitselementen bzw. Antriebseinrichtungen ausgewählt ist, welche Elektromotoren, insbesondere Rotations- oder Linearmotoren, magnetische Elemente und dergleichen enthält. Die Energie zur Erzeugung der Bewegung des Transportelementes gegenüber der Transportbahn berührungslos übertragen. Auch die Energie für die Antriebseinrichtung wird berührungslos übertragen.

Vorteilhaft ist, dass wenigstens ein Transportelement derart ausgestaltet ist, dass es auf seinen Wegen bezüglich der Transportbahn einen Geschwindigkeitsunterschied eines Transportes bezüglich einer der Transportvorrichtung vorausgehenden Behandlungseinrichtung für die Behältnisse und einer der Transportvorrichtung nachfolgenden Behandlungseinrichtung ausgleichen kann.

Die Vorrichtung weist eine Vielzahl von Transportelementen auf, die bezüglich der Transportbahn beweglich sind und deren Bewegungen bezüglich der Transportbahn unabhängig voneinander steuerbar sind. Auf diese Weise können sehr individuell beispielsweise unterschiedliche Teilungsabstände eingestellt werden.

Bei einer weiteren vorteilhaften Ausführungsform weist die Transportbahn mindestens eine Pufferstrecke auf, in welche mindestens eines des mindestens einen Transportelementes laufen kann, um die Dichte der Transportelemente an der Transportbahn zu verändern.

Bei einer weiteren vorteilhaften Ausführungsform ist die Transportbahn als Magnetschwebetrasse einer Magnetschiebebahn ausgebildet. Es wäre jedoch auch denkbar, dass die einzelnen Transportelemente über Rollen entlang der Transportbahn gleiten.

Bei einer weiteren vorteilhaften Ausführungsform ist das wenigstens ein Transportelement voll magnetisch oder teilweise magnetisch und teilweise mechanisch an der Transportbahn gelagert.

Bei einer weiteren vorteilhaften Ausführungsform kann die Transportbahn beliebige geometrische Gestalten aufweisen. So kann die Transportbahn in dem Bereich, in dem die Transportelemente jeweils Behältnisse tragen, einen im Wesentlichen geradlinigen Verlauf aufweisen, aber gegebenenfalls auch gekrümmte Verläufe.

Bei einer weiteren vorteilhaften Ausführungsform weist die Vorrichtung eine Dreheinrichtung auf, welche die Behältnisse bezüglich deren Längsachse um einen vorgegebenen Drehwinkel dreht. In diesem Falle kann es sich bei der Antriebseinrichtung um einen Rotationsantrieb handeln, der die besagte Drehung bewirkt. Bei einer weiteren vorteilhaften Ausführungsform ist entlang der Transportbahn wenigstens eine Behandlungseinrichtung angeordnet, welche zum Behandeln der von den Transportelementen transportierten Behältnisse dient. Dabei ist es möglich, dass mehrere solcher Behandlungseinrichtungen beispielsweise seriell oder parallel zueinander angeordnet sind. So wäre es möglich, dass eine Vielzahl von gleichartigen Behandlungselementen, d.h. Behandlungselementen, welche jeweils den gleichen Behandlungsschritt durchführen, parallel oder nebeneinander angeordnet sind. Es wäre jedoch auch möglich, dass mehrere Behandlungselemente, welche unterschiedliche Behandlungsschritte durchführen, an der Transportbahn angeordnet sind.

Bei einer weiteren vorteilhaften Ausführungsform sind die Transportelemente mittels Rollenelementen und insbesondere Rollen an der Transportbahn gelagert.

Die Transportelemente weisen jeweils magnetische Elemente auf, die zur Erreichung der Bewegung dienen, wobei diese magnetischen Elemente bevorzugt Permanentmagnete sind. Es sind weitere magnetische Elemente vorgesehen, welche zur Energieversorgung der Antriebseinrichtung dienen. Vorteilhaft sind die an dem Transportelement angeordneten magnetischen Elemente, welche zur Bewegung des Transportelementes in seiner Gesamtheit dienen und die (an dem Transportelement angeordneten) magnetischen Elemente, welche zur Versorgung der Antriebseinrichtung dienen, zueinander versetzt angeordnet und insbesondere in einer Transportrichtung der Transportelemente zueinander versetzt angeordnet. Bevorzugt sind diejenigen magnetischen Elemente des Transportelementes, die der Versorgung der Antriebseinrichtung dienen, in einer Bewegungsrichtung des Transportelementes vor den genannten Permanentmagneten (welche der Erzeugung der Bewegung dienen) angeordnet.

Erfindungsgemäß weisen die Transportelemente Energiespeichermittel auf, um die Antriebseinrichtungen mit elektrischer Energie zu versorgen, wobei auch diese Energiespeichermittel durch die oben beschriebenen induktiven Maßnahmen aufgeladen werden. Daneben können auch Spannungsglättungsmittel vorgesehen sein, welche eine zugeführte Spannung zur Ausgabe an die Antriebseinrichtung glätten. Auch können Gleichrichtungseinrichtungen zur Gleichrichtung der induktiv zugeführten Spannung vorgesehen sein.

Bei einer weiteren vorteilhaften Ausführungsform ist an der Transporteinrichtung wenigstens ein (elektrisches) Spulenelement vorgesehen, welches zur Bereitstellung der elektrischen Energie an die Antriebseinrichtung dient. Mittels dieser Spule können durch die an der Transportbahn angeordneten Magneten Ströme erzeugt bzw. induziert werden, die wiederum der Antriebseinrichtung zugeführt werden. Dies wird unter Bezugnahme auf die Figuren genauer erläutert. Dieses Spulenelement kann dabei um einen Kern gewickelt sein. Bevorzugt weisen die Enden dieses Kerns auf die Transportbahn bzw. deren Elektromagneten zu. Dieses Spulenelement steht dabei bevorzugt in elektrisch leitender Verbindung mit der Antriebseinrichtung.

Die magnetischen Elemente der Transportbahn sind wenigstens teilweise Elektromagneten. Durch eine geeignete Ansteuerung dieser Elektromagneten kann einerseits eine Bewegung der Transportelemente gegenüber der Transportbahn erreicht werden, andererseits ist es jedoch auch möglich, durch eine geeignete Ansteuerung die Antriebseinrichtung induktiv mit elektrischer Energie zu versorgen.

Demnach dienen also die besagten magnetischen Elemente der Transportbahn auch der elektrischen Versorgung der Antriebseinrichtung. Vorteilhaft ist wenigstens ein magnetisches Element durch entsprechende Ansteuerung sowohl zur Erreichung der Bewegung des Transportelementes in seiner Gesamtheit als auch zur Versorgung der Antriebseinrichtung geeignet. Es wäre jedoch beispielsweise auch möglich, dass an der Transportbahn zwei parallele Bahnen von Magneten angeordnet sind, wobei eine dieser Bahnen zur Erzeugung der Bewegung dient und die andere zur Versorgung der Antriebseinrichtung.

Erfindungsgemäß weist die Vorrichtung eine Steuerungseinrichtung auf, welche die magnetischen Elemente mit einer Bewegungserzeugungsspannung versorgt, durch welche eine Bewegung der Transportelemente verursacht wird und welche die magnetischen Elemente mit einer Aktivatorspannung versorgt, welche die Antriebseinrichtung mit elektrischer Energie versorgt. Vorteilhaft handelt es sich bei beiden Spannungen um Wechselspannungen. Dabei kann einerseits eine Geschwindigkeit des Transportelementes gegenüber der Transportbahn gesteuert werden, aber auch eine Aktivierung bzw. eine Betätigung der Antriebseinrichtung.

Bei einer weiteren vorteilhaften Ausführungsform weist die Aktivatorspannung eine höhere Frequenz auf als die Bewegungserzeugungsspannung. Bei der Bewegungserzeugungsspannung ist es beispielsweise möglich, dass in vorgegebener Reihenfolge die einzelnen Magnete magnetisiert werden und so das Transportelement durch die magnetische Kraft vorwärts gezogen wird. Die Spannungen, die verwendet werden, um das wenigstens ein Arbeitselement auf dem Transportelement zu betreiben, sind demgegenüber höherfrequent, um auf diese Weise nicht die Bewegung des Transportelementes zu beeinträchtigen.

Bei einer weiteren vorteilhaften Ausführungsform weist die Transportbahn eine Vielzahl von Spulenelementen auf, um die magnetischen Elemente zu versorgen. Dabei ist es jeweils möglich, dass zwei nebeneinander angeordnete Elektromagnetenden jeweils von einer Spule versorgt werden, so dass je nach Stromrichtung innerhalb der Spule einer der beiden Bereiche zum magnetischen Pluspol und der andere zum magnetischen Minuspol wird.

Die vorliegende Erfindung ist weiterhin auf ein Verfahren zum Transportieren von Behältnissen nach Anspruch 4 gerichtet, wobei die Behältnisse mit einer Vielzahl von Transportelementen entlang einer bevorzugt aber nicht notwendigerweise umlaufenden Transportbahn bewegt werden und wobei die Transportbahn eine Vielzahl von magnetischen Elementen aufweist und die Bewegung der Transportelemente entlang der Transportbahn durch eine magnetische Kraft erzeugt wird. Dabei ist auch an den Transportelementen wenigstens ein magnetisierbares Element angeordnet, welches der Fortbewegung des Transportelements entlang der Transportbahn dient.

Erfindungsgemäß ist an wenigstens einem Transportelement eine durch elektrische Energie betreibbare Antriebseinrichtung angeordnet und auch diese Antriebseinrichtung wird induktiv mit elektrischer Energie versorgt.

Bei den Behältnissen handelt es sich um Kunststoffflaschen oder Kunststoffvorformlinge. Vorteilhaft werden die Behältnisse von einer ersten Behandlungseinrichtung, welche diese Behältnisse in einer ersten vorgegebenen Weise behandelt, zu einer zweiten Behandlungseinrichtung, welche die Behältnisse in einer zweiten vorgegebenen Weise behandelt, transportiert.

Erfindungsgemäß werden die magnetischen Elemente der Transportstrecke mit einer Bewegungserzeugungsspannung versorgt, durch welche die Bewegung der Transportelemente verursacht wird sowie mit einer Aktivatorspannung, welche die Antriebseinrichtung mit elektrischer Energie versorgt. Bevorzugt erfolgt dabei die Versorgung mit den jeweiligen Spannungen zumindest zeitweise zeitgleich. Es wäre jedoch auch möglich, dass die Versorgung der Antriebseinrichtungen nicht kontinuierlich erfolgt, sondern beispielsweise nur an bestimmten Bahnabschnitten, da erfindungsgemäß an den Transportelementen jeweils Energiespeichermittel, wie etwa Batterien oder Kondensatoren vorgesehen sind und diese beispielsweise in denjenigen Bereichen aufgeladen werden, in denen sich kein Behältnis an den Transportelementen befindet.

Bei einem weiteren vorteilhaften Verfahren wird ein erstes magnetisches Feld, welches die Bewegung der Transportelemente verursacht, in einem ersten vorgegebenen Bereich bezogen auf das Transportelement übertragen und ein zweites magnetisches Feld, welches die Antriebseinrichtung mit elektrischer Energie versorgt, wird in einem zweiten Bereich bezogen auf das Transportelement übertragen. Die beiden Bereiche sind vorteilhaft gegenüber einander versetzt. Vorteilhaft liegt der besagte zweite Bereich vor dem ersten Bereich in einer Transportrichtung des Transportelements gegenüber der Transportbahn.

Es wäre jedoch auch möglich, dass die beiden Magnetfelder in den gleichen Bereichen übertragen werden, und insbesondere durch die gleichen magnetischen Elemente. So könnte durch die magnetischen Elemente einerseits die Bewegung des jeweiligen Transportelements erreicht werden, gleichzeitig könnte jedoch die an diese magnetischen Elemente angelegte Spannung mit einer weiteren Spannung moduliert werden, welche zur Versorgung der elektrischen Antriebseinrichtung dient.

Vorteilhaft werden die Transportelemente mittels Rollenkörpern gegenüber der Transportbahn bewegt.

Bei einem weiteren vorteilhaften Verfahren werden die Transportelemente in einer Ebene und besonders bevorzugt in einer horizontalen Ebene bewegt.

Bei einer weiteren vorteilhaften Ausführungsform werden die Transportelemente wenigstens abschnittsweise entlang einer Transportbahn mit endlicher Krümmung bewegt. Vorteilhaft werden die Transportelemente auch entlang einer Transportbahn mit unterschiedlichen Krümmungsrichtungen bewegt, das heißt mit Krümmungsradien, welche unterschiedliche Vorzeichen aufweisen.

Die Bewegung wenigstens eines Transportelements wird unabhängig von der Bewegung wenigstens eines zweiten Transportelements gesteuert. Dies bedeutet, dass sich beispielsweise eine Relativgeschwindigkeit eines bestimmten Transportelements gegenüber der Relativgeschwindigkeit eines zweiten Transportelements während des Transports der Transportelemente bezüglich der Transportbahn ändern kann.

Vorteilhaft verändert sich eine Teilung zwischen zwei aufeinander folgenden Transportelementen wenigstens zeitweise während des Transports entlang der Transportbahn.

Weitere Vorteile und Ausführungsformen ergeben sich aus den beigefügten Figuren:

### Darin zeigen:

- Fig. 1: Eine Anordnung zum Behandeln von Behältnissen mit einer erfindungsgemäßen Vorrichtung; und
- Fig. 2: eine Detaildarstellung einer erfindungsgemäßen Vorrichtung.

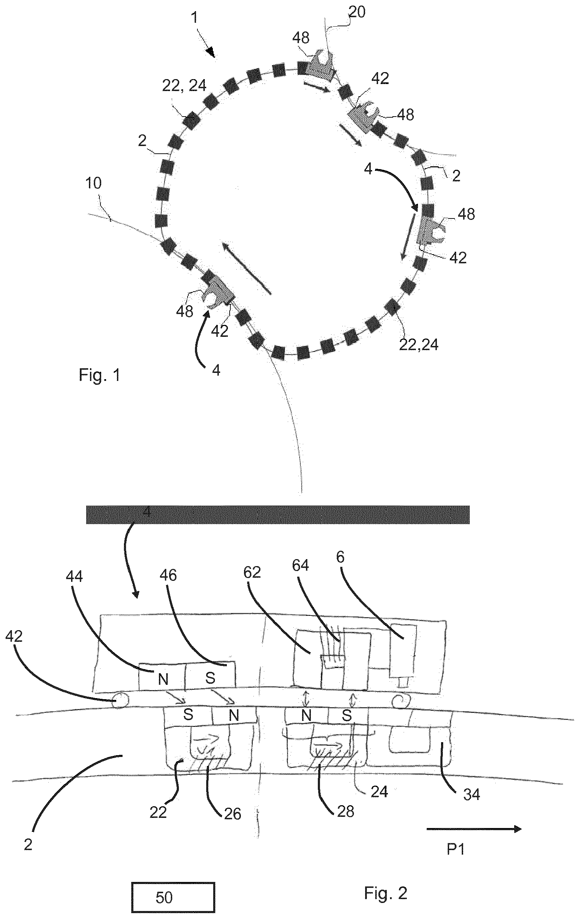

Fig. 1 zeigt eine Anlage zur Behandlung von Behältnissen. Diese Anordnung weist dabei eine erste Behandlungsmaschine 10 auf, welche die Behältnisse in einer vorgegebenen Weise behandelt. Daneben weist die Anordnung eine zweite Behandlungsmaschine 20 auf, welche in einer Transportrichtung der Behältnisse nach der ersten Behandlungsmaschine angeordnet ist und welche die Behältnisse in einer zweiten vorgegebenen Weise behandelt. Dabei kann es sich beispielsweise bei der ersten Vorrichtung um einen Ofen handeln, der Kunststoffvorformlinge erwärmt und bei der zweiten Behandlungsvorrichtung um eine Umformungseinrichtung, welche die (erwärmten) Kunststoffvorformlinge zu Kunststoffbehältnissen umformt. Es wären jedoch auch andere Anordnungen bzw. Kombinationen aus Maschinen denkbar, beispielsweise eine Umformungseinrichtung und eine dieser nachgeordneten Fülleinrichtung, eine Fülleinrichtung und eine dieser nachgeordneten Verschließeinrichtung und dergleichen.

Zwischen diesen beiden Vorrichtungen 10, 20 befindet sich eine erfindungsgemäße Vorrichtung 1 zum Transportieren von Kunststoffbehältnissen. Diese Vorrichtung 1 weist dabei eine stationär angeordnete Transportbahn 2 auf, der gegenüber sich eine Vielzahl von Transportelementen 4 bewegen. Dabei sind hier jedoch lediglich drei dieser Transportelemente im Detail dargestellt. Damit können sich die einzelnen Transportelemente entlang der hier geschlossenen Transportbahn 2 bewegen. Diese Transportbahn weist dabei einen Träger auf, bezüglich dessen die einzelnen Transportelemente sich bewegen können.

Die Erfindung erlaubt jedoch eine unabhängige Steuerung der Bewegungen der einzelnen Transportelemente. So können beispielsweise die Teilungen zwischen zwei benachbarten Transportelementen weitgehend beliebig vergrößert und verkleinert werden. Auch können die Transportelemente unabhängig voneinander schneller oder langsamer bewegt werden.

Weiterhin bietet die erfindungsgemäße Vorgehensweise den Vorteil, dass die Transportbahn auch an die Ausgestaltungen der nachfolgenden Vorrichtungen angepasst werden kann, hier insbesondere an einen kreisförmigen Transportpfad, der sich im Bereich der ersten Behandlungsvorrichtung 10 und der zweiten Behandlungsvorrichtung 20 ergibt. Die einzelnen Transportelemente weisen hier einen Träger 46 auf sowie ein daran angeordnetes Halteelement 48 zum Halten der (nicht gezeigten) Kunststoffbehältnisse. Im Betrieb wäre es beispielsweise möglich, dass die Kunststoffvorformlinge von der ersten Vorrichtung 10 zum Behandeln von Kunststoffbehältnissen übernommen werden und dann relativ schnell in den Bereich der zweiten Vorrichtung verbracht werden, wo sie wieder mit einer an die zweite Behandlungsvorrichtung 20 angepassten Geschwindigkeit transportiert werden.

Fig. 2 zeigt eine detaillierte Darstellung einer erfindungsgemäßen Vorrichtung 1. Dabei ist wieder die Transportbahn 2 dargestellt. Diese Transportbahn 2 weist eine Vielzahl von Magnetelementen 22, 24 auf. Diese sind jeweils in Folge geschaltet und weisen hier jeweils einen Magnetkern auf, der von einer Spule 26, 28 umwickelt ist. Durch eine entsprechende Ansteuerung dieser Spule können die magnetischen Elemente 22, 24 beliebig angesteuert werden.

Beweglich gegenüber dieser (stationären) Transportbahn 2 kann sich ein in seiner Gesamtheit mit 4 bezeichnetes Transportelement 4 bewegen. Zu diesem Zweck sind hier Rollen 42 vorgesehen, mittels denen das Transportelement gegenüber der Transportbahn 2 rollen kann.

Es wäre jedoch auch möglich, dass das Transportelement 4 in der Art einer Magnetschwebebahn ausgeführt ist. Durch eine entsprechende Beschaltung der aufeinanderfolgenden magnetischen Elemente 22, 24 kann das Transportelement 4 beispielsweise in der Richtung von links nach rechts in der Figur (Pfeil P1) bewegt werden. Zu diesem Zweck sind an dem Transportelement 4 ebenfalls magnetisierbare Elemente und hier insbesondere Permanentmagneten 44, 46 angeordnet. Diese sind dabei bevorzugt mit wechselnden Polaritäten vorgesehen. Bei der in Fig. 2 gezeigten Situation wird das Transportelement durch die entsprechende Magnetisierung der magnetischen Elemente 22, 24 noch nach rechts gezogen.

Zusätzlich ist an dem Transportelement 4 ein Arbeitselement 6 bzw. eine Antriebseinrichtung 6 angeordnet. Diese ist hier nur schematisch dargestellt, und es kann sich hierbei insbesondere um eine beliebige Art eines elektrischen Antriebs handeln, insbesondere Elektromotoren, Elektromagnete und dergleichen.

Bei dem Arbeitselement bzw. der Antriebseinrichtung handelt es sich um eine Ansteuerung, die ein Halteelement ansteuert, um so ein Halten oder Loslassen eines Behältnisses zu bewirken.

Daneben weist das Transportelement 2 eine weitere Spulenanordnung 64 auf sowie auch einen Eisenkern 62. Mittels dieser Anordnung kann über ein magnetisches Wechselfeld Strom bzw. Spannung zu der Antriebseinrichtung 6 geführt werden und dabei die Antriebseinrichtung 6 damit berührungslos mit Spannung versorgt werden. Zu diesem Zweck wird an die Spule 28 des magnetischen Elements 24 eine (hochfrequente) Wechselspannung angelegt, die ein entsprechendes magnetisches Wechselfeld erzeugt. Über dieses magnetische Wechselfeld kann die Antriebseinrichtung 6 mit Strom versorgt werden.

Das Bezugszeichen 50 kennzeichnet eine Steuerungseinrichtung, welche die einzelnen magnetischen Elemente ansteuert. Dabei wird darauf hingewiesen, dass die einzelnen magnetischen Elemente 22 und 24 je nach ihrer Position sowohl zur Fortbewegung des Transportelements 4 als auch zur Stromversorgung der Antriebseinrichtung 6 dienen können. Falls sich also beispielsweise das Transportelement 4 ausgehend von der in Fig. 2 gezeigten Situation um eine Position weiter bewegt hat, übernimmt das magnetische Element 24 die Bewegung bzw. das Weiterziehen des Transportelementes und das sich rechts an das magnetische Element 24 anschließende weitere magnetische Element 34 übernimmt die Spannungsversorgung der Antriebseinrichtung 6. Dies bedeutet, dass im Betrieb auch die Beaufschlagung der magnetischen Elemente 22, 24 mit dem elektrischen Wechselfeld zur Versorgung der Antriebseinrichtung wandert und zwar bevorzugt mit der gleichen Geschwindigkeit, mit der sich auch das Transportelement 4 gegenüber der Transportbahn 2 bewegt. Bevorzugt ist daher der Abstand zwischen einem magnetischen Element, welches momentan für die Energieversorgung des Antriebselements 6 zuständig ist, und einem magnetischen Element, welches jeweils momentan für die Fortbewegung des Transportelements 4 zuständig ist, gleichbleibend.

Mit anderen Worten ist die Steuerungseinrichtung so gestaltet, dass das jeweilige Weiterschalten des Wechselfeldes bzw. des Wechselstroms für die magnetischen Elemente mit der gleichen Geschwindigkeit folgt wie die Magnetisierungswelle voranschreitet, welche wiederum für die Bewegung des Transportelements 4 zuständig ist.

Wie erwähnt könnte jedoch auch zu einem bestimmten Zeitpunkt das gleiche magnetische Element sowohl für die Erzeugung des Transportelements in seiner Gesamtheit als auch für die elektrische Versorgung der Antriebseinrichtung 6 verwendet werden.

Es wäre jedoch auch möglich, das magnetische Elemente ausschließlich zum Fortbewegen des Transportelements 4 vorgesehen sind und beispielsweise hierzu parallel angeordnete magnetische Elemente ausschließlich für die Stromversorgung der Antriebseinrichtung 6 zuständig sind. In diesem Falle wäre es ebenfalls denkbar, dass sich die Bestromung bzw. der Beschaltung dieser beiden magnetischen Elemente jeweils mit der gleichen Geschwindigkeit fortbewegt, insbesondere mit der Geschwindigkeit der Transportelemente gegenüber der Transportbahn 2.

Damit kann bevorzugt die Spuleneinrichtung 64 mit den Spuleneinrichtungen der Transportbahn jeweils eine Paarung bilden, die vom Prinzip her wie ein Transformator aufgebaut ist. Neben dem eigentlichen Magnetfeld, das zur Fortbewegung des Transportelements dient, kann das oben erwähnte zweite Magnetfeld mit den beiden Polen mitwandern. Dieses zweite Magnetfeld wechselt mit einer höheren Frequenz die Richtung und erzeugt so ein wechselndes Magnetfeld relativ zur der Spuleneinrichtung 64.

Vorzugsweise kann dieses zweite Magnetfeld beliebig zu und abgeschaltet werden, was auch durch den Aufbau der Anordnung als Linearmotors bedingt ist.

Vorzugsweise stellt dieser Schaltvorgang bzw. diese Versorgung der Antriebseinrichtung in der Steuerungseinrichtung eine zweite Bewegungseinrichtung dar, die in einem festen Abstand zu dem ersten Antrieb, der für die Fortbewegung des Transportelements zuständig ist, angeordnet ist. Dabei kann eine Steuerungssoftware vorgesehen sein um das Magnetfeld zur Versorgung der Antriebseinrichtung mit einer höheren Frequenz wechseln zu lassen.

Daneben wäre es noch möglich, dass die Vorrichtung Auslöseeinrichtungen aufweist, welche eine Versorgung der Antriebseinrichtung an vorgegebenen Positionen des Transportelements bezüglich der Transportbahn zu- oder abschalten. So könnte beispielsweise auf dem Transportelement und/oder an der Transportbahn eine Lichtschrankeneinrichtung angeordnet sein, welche eine Position des Transportelements 4 erfasst. Bevorzugt kann die Antriebseinrichtung in Abhängigkeit von einer so erfaßten Position des Transportelements 4 bezüglich der Transportbahn gesteuert werden.

Allerdings wäre es auch denkbar, dass eine Position des Transportelements bezüglich der Transportbahn durch die Transportbahn bzw. auf Basis hier induzierter Ströme bestimmt wird.

So könnte beispielsweise eine an dem Transportelement 4 angeordnete Greifeinrichtung zum Greifen der Behältnisse derart angesteuert werden, dass sie ein Behältnis an einer vorgegebenen Position des Behältnisses greift und/oder den Griff des Behältnisses an einer weiteren vorgegebenen Position des Transportelements bezüglich der Transportbahn löst.

Dabei wäre es möglich, dass gemeinsam mit der Versorgungsenergie zum elektrischen Versorgen der Antriebseinrichtung auch (etwa durch eine geeignete Modulation des Signals) Befehle an die Antriebseinrichtung übermittelt werden, beispielsweise Steuerbefehle für die Antriebseinrichtung.

Es wäre weiterhin auch möglich, dass an wenigstens einem Transportelement (4) mehrere Antriebseinrichtungen angeordnet sind. Dabei wäre es möglich, dass diese Antriebselemente unabhängig voneinander gesteuert bzw. mit Energie versorgt werden. Dabei kann diese Energie jeweils in der oben genannten Weise d.h. induktiv übertragen werden.

Es wäre weiterhin auch möglich, dass an dem Transportelement eine Prozessoreinrichtung bzw. eine Steuerungseinrichtung zum Steuern der Antriebseinrichtung angeordnet ist. Weiterhin ist es auch möglich, dass die Vorrichtung eine Erfassungseinrichtung zum Erfassen einer Position eines Antriebselements der Antriebseinrichtung aufweist.

### Bezugszeichenliste

- 1: erfindungsgemäße Vorrichtung
- 2: Transportbahn
- 4: Transportelemente
- 6: Antriebseinrichtung
- 10: erste Behandlungsmaschine
- 20: zweite Behandlungsmaschine
- 22, 24, 34: Vielzahl von Magnetelementen
- 26, 28: Spule
- 42: Träger
- 44, 46: Permanentmagnete
- 48: Halteelement
- 50: Steuerungseinrichtung
- 62: Eisenkern
- 64: Spulenanordnung

## Patentansprüche

1. Vorrichtung (1) zum Transportieren von Behältnissen mit einer Transportbahn (2) und mindestens einem Transportelement (4), welches bezüglich dieser Transportbahn beweglich angeordnet ist, wobei dieses Transportelement (4) zumindest teilweise mittels einer magnetischen Kraft antreibbar ist, wobei die Transportbahn eine Vielzahl von magnetischen Elementen (22, 24), welche wenigstens teilweise Elektromagneten sind, aufweist und an dem Transportelement (4) ebenfalls wenigstens ein magnetisierbares Element (44, 46) angeordnet ist, und wobei durch eine Ansteuerung der magnetischen Elemente (22, 24) der Transportbahn eine Fortbewegung des Transportelements gegenüber der Transportbahn erreichbar ist,
wobei die zu transportierenden Behältnisse Kunststoffflaschen oder Kunststoffvorformlinge sind und an dem Transportelement (4) ein elektrisch betriebenes Arbeitselement (6) angeordnet ist, welche induktiv mit elektrischer Energie versorgbar ist, wobei die Bewegung wenigstens eines Transportelements unabhängig von der Bewegung wenigstens eines zweiten Transportelements gesteuert wird
und wobei an dem Transportelement (4) Energiespeichermittel vorgesehen sind, welche induktiv aufgeladen werden, wobei die magnetischen Elemente (44, 46) der Transportelemente zur Erreichung der Bewegung der Transportelemente in ihrer Gesamtheit dienen, wobei diese magnetischen Elemente (44, 46) der Transportelemente bevorzugt Permanentmagnete sind, und die Transportelemente zur induktiven Aufladung der Energiespeichermittel weitere magnetische Elemente aufweisen,
wobei die einzelnen Transportelemente (4) einen Träger (42) sowie ein daran angeordnetes Halteelement (48) zum Halten der Kunststoffbehältnisse aufweisen, und es sich bei dem Arbeitselement (6) um eine Ansteuerung handelt, die das Halteelement (48) ansteuert, um so ein Halten oder Loslassen des Behältnisses bewirken, und wobei die Energiespeichermittel die Arbeitselemente (6) mit elektrischer Energie versorgen,
wobei die magnetischen Elemente (22, 24) der Transportbahn auch der elektrischen Versorgung des Arbeitselements dienen und die Vorrichtung eine Steuerungseinrichtung aufweist, welche die magnetischen Elemente (22, 24) der Transportbahn mit einer Bewegungserzeugungsspannung versorgt, durch welche eine Bewegung der Transportelemente verursacht wird und welche die magnetischen Elemente (22, 24) der Transportbahn mit einer Aktivatorspannung versorgt, welche das Arbeitselement mit elektrischer Energie versorgt.

2. Vorrichtung (1) nach Anspruch 1,
**dadurch gekennzeichnet, dass**
die Aktivatorspannung eine höhere Frequenz aufweist als die Bewegungserzeugungsspannung.

3. Vorrichtung (1) nach wenigstens einem der vorangegangenen Ansprüche,
**dadurch gekennzeichnet, dass**
die Transportbahn (2) eine Vielzahl von Spulenelementen (26, 28) aufweist, um die magnetischen Elemente (22, 24) zu versorgen.

4. Verfahren zum Transportieren von Behältnissen, wobei die Behältnisse mit einer Vielzahl von Transportelementen (4) entlang einer Transportbahn (2) bewegt werden, wobei die Transportbahn (2) eine Vielzahl von magnetischen Elementen (22, 24), welche wenigstens teilweise Elektromagneten sind, aufweist und wobei die Bewegung der Transportelemente (4) entlang der Transportbahn (2) durch eine magnetisehe Kraft erzeugt wird, wobei auch an den Transportelementen (2) wenigstens ein magnetisierbares Element (44,46) angeordnet ist, welches der Fortbewegung der Transportelemente (4) entlang der Transportbahn (2) dient,
wobei die zu transportierenden Behältnisse Kunststoffflaschen oder Kunststoffvorformlinge sind und an wenigstens einem Transportelement (4) wenigstens ein durch elektrische Energie betreibbares Arbeitselement (6) angeordnet ist und auch dieses wenigstens eine Arbeitselement (6) induktiv mit elektrischer Energie versorgt wird, wobei die Bewegung wenigstens eines Transportelements unabhängig von der Bewegung wenigstens eines zweiten Transportelements gesteuert wird
und wobei an dem Transportelement (4) Energiespeichermittel vorgesehen sind, welche induktiv aufgeladen werden, wobei die magnetischen Elemente (44, 46) der Transportelemente zur Erreichung der Bewegung der Transportelemente in ihrer Gesamtheit dienen, wobei diese magnetischen Elemente (44, 46) der Transportelemente bevorzugt Permanentmagneten sind, und die Transportelemente zur induktiven Aufladung der Energiespeichermittel weitere magnetische Elemente aufweisen, wobei die einzelnen Transportelemente (4) einen Träger (42) sowie ein daran angeordnetes Halteelement (48) zum Halten der Kunststoffbehältnisse aufweisen, und es sich bei dem Arbeitselement (6) um eine Ansteuerung handelt, die das Halteelement (48) ansteuert, um so ein Halten oder Loslassen des Behältnisses bewirken,
und wobei die Energiespeichermittel die Arbeitselemente (6) mit elektrischer Energie versorgen,
wobei die magnetischen Elemente (22, 24) der Transportbahn auch der elektrischen Versorgung des Arbeitselements dienen und die magnetischen Elemente (22, 24) der Transportbahn mit einer Bewegungserzeugungsspannung versorgt werden, durch welche eine Bewegung der Transportelemente (4) verursacht wird, sowie mit einer Aktivatorspannung, welche das Arbeitselement mit elektrischer Energie versorgt.

5. Verfahren nach Anspruch 4,
**dadurch gekennzeichnet, dass**
ein erstes magnetisches Feld, welches die Bewegung der Transportelemente (4) verursacht in einem ersten vorgegebenen Bereich bezogen auf das Transportelement (4) übertragen wird und ein zweites magnetisches Feld, welches das Arbeitselement (6) mit elektrischer Energie versorgt, in einem zweiten Bereich bezogen auf das Transportelement (4) übertragen wird, und die beiden Bereiche gegenüber einander versetzt sind.

## Claims

1. Apparatus (1) for transporting containers, having a transport path (2) and at least one transport element (4) which is arranged such as to be movable relative to this transport path, wherein this transport element (4) can be driven at least partially by means of a magnetic force, wherein the transport path has a plurality of magnetic elements (22, 24) which are at least partially electromagnets, and at least one magnetizable element is also arranged on the transport element (4), and wherein a movement of the transport element relative to the transport path can be achieved by actuating the magnetic elements (22, 24) of the transport path,
wherein the containers to be transported are plastic bottles or plastic preforms and an electrically operated working element (6), which can be supplied inductive with electrical energy, is arranged on the transport element (4), wherein the movement of at least one transport element is controlled independently of the movement of at least one second transport element,
and wherein energy storage means, which are charged inductively, are provided on the transport element (4), wherein the magnetic elements (22, 24) of the transport elements serve for moving the transport elements as a whole, wherein these magnetic elements (44, 46) of the transport elements are preferably permanent magnets, and the transport elements comprise further magnetic elements for inductively charging the energy storage means,
wherein the individual transport elements (4) have a carrier (42) and a holding element (48) arranged thereon for holding the plastic containers and the working element (6) is an actuator which actuates the holding element (48) in order thus to effect a holding or release of the container, and wherein the energy storage means supply the working elements (6) with electrical energy,
wherein the magnetic elements (22, 24) of the transport path also serve for the electrical supply to the working element (6) and the apparatus (1) has a control device (50) which supplies the magnetic elements (22, 24) with a movement-generating voltage, by which a movement of the transport elements (4) is brought about, and/or which supplies the magnetic elements (22, 24) with an activator voltage which supplies the working element (6) with electrical energy.

2. Apparatus (1) according to claim 1,
**characterized in that**
the activator voltage has a higher frequency than the movement-generating voltage.

3. Apparatus (1) according to at least one of the preceding claims,
**characterized in that**
the transport path (2) has a plurality of coil elements (26, 28) for supplying the magnetic elements (22, 24).

4. Method for transporting containers, wherein the containers are moved by a plurality of transport elements (4) along a transport path (2), wherein the transport path (2) has a plurality of magnetic elements (22, 24) which are at least partially electromagnets, and wherein the movement of the transport elements (4) along the transport path (2) is generated by a magnetic force, wherein at least one magnetizable element (44, 46) is also arranged on the transport elements (2), which magnetizable element serves for the movement of the transport elements (4) along the transport path (2),
wherein the containers to be transported are plastic bottles or plastic preforms and at least one working element (6) which can be operated by electrical energy is arranged on at least one transport element (4), and this at least one working element (6) is also supplied inductive with electrical energy, wherein the movement of at least one transport element is controlled independently of the movement of at least one second transport element,
and wherein energy storage means, which are charged inductively, are provided on the transport element (4), wherein the magnetic elements (22, 24) of the transport elements serve for moving the transport elements as a whole, wherein these magnetic elements (44, 46) of the transport elements are preferably permanent magnets, and the transport elements comprise further magnetic elements for inductively charging the energy storage means,
wherein the individual transport elements (4) have a carrier (42) and a holding element (48) arranged thereon for holding the plastic containers and the working element (6) is an actuator which actuates the holding element (48) in order thus to effect a holding or release of the container, and wherein the energy storage means supply the working elements (6) with electrical energy,
wherein the magnetic elements (22, 24) of the transport path also serve for the electrical supply to the working element (6) and the magnetic elements (22, 24) of the transport path are supplied with a movement-generating voltage, by which the movement of the transport elements (4) is brought about, and with an activator voltage which supplies the working element (6) with electrical energy.

5. Method according to claim 4,
**characterized in that**
a first magnetic field, which brings about the movement of the transport elements (4), is transmitted in a first predefined region in relation to the transport element (4) and a second magnetic field, which supplies the drive device (6) with electrical energy, is transmitted in a second region in relation to the transport element (4), and the two regions are offset relative to one another.

## Revendications

1. Dispositif (1) destiné à transporter des récipients avec une voie de transport (2) et au moins un élément de transport (4), lequel est agencé de façon mobile par rapport à cette voie de transport, dans lequel cet élément de transport (4) peut être entraîné au moins partiellement au moyen d'une force magnétique, dans lequel la voie de transport présente une pluralité d'éléments magnétiques (22, 24), lesquels sont au moins partiellement des électroaimants, et au moins un élément magnétisable (44, 46) est également agencé sur l'élément de transport (4), et dans lequel une locomotion de l'élément de transport par rapport à la voie de transport peut être obtenue par un pilotage des éléments magnétiques (22, 24) de la voie de transport,
dans lequel les récipients à transporter sont des bouteilles en plastique ou des préformes en plastique et un élément de travail (6) actionné électriquement, qui peut être alimenté de façon inductive avec une énergie électrique, est disposé sur l'élément de transport (4), dans lequel le déplacement d'au moins un élément de transport est commandé indépendamment du déplacement d'au moins un deuxième élément de transport,
et dans lequel des moyens d'accumulation d'énergie, chargés de façon inductive, sont prévus sur l'élément de transport (4), dans lequel les éléments magnétiques (44, 46) des éléments de transport servent à obtenir le déplacement des éléments de transport dans leur ensemble, dans lequel ces éléments magnétiques (44, 46) des éléments de transport sont de préférence des aimants permanents, et les éléments de transport présentent d'autres éléments magnétiques pour le chargement inductif des moyens d'accumulation d'énergie,
dans lequel les éléments de transport (4) individuels présentent un support (42) ainsi qu'un élément de retenue (48) agencé dessus pour retenir les récipients en plastique, et l'élément de travail (6) est un pilote qui pilote l'élément de retenue (48) pour ainsi occasionner une retenue ou un lâcher du récipient,
et dans lequel les moyens d'accumulation d'énergie alimentent les éléments de travail (6) avec une énergie électrique,
dans lequel les éléments magnétiques (22, 24) de la voie de transport servent aussi à l'alimentation électrique de l'élément de travail et le dispositif présente un équipement de commande, lequel alimente les éléments magnétiques (22, 24) de la voie de transport avec une tension génératrice de mouvement par laquelle un déplacement des éléments de transport est occasionné et laquelle alimente les éléments magnétiques (22, 24) de la voie de transport avec une tension d'activation qui alimente l'élément de travail avec une énergie électrique.

2. Dispositif (1) selon la revendication 1,
**caractérisé en ce que**
la tension d'activation présente une fréquence plus élevée que la tension de provocation de déplacement.

3. Dispositif (1) selon au moins l'une des revendications précédentes,
**caractérisé en ce que**
la voie de transport (2) présente une pluralité d'éléments de bobines (26, 28) pour alimenter les éléments magnétiques (22, 24).

4. Procédé destiné à transporter des récipients, dans lequel les récipients sont déplacés avec une pluralité d'éléments de transport (4) le long d'une voie de transport (2), dans lequel la voie de transport (2) présente une pluralité d'éléments magnétiques (22, 24), lesquels sont au moins partiellement des électroaimants, et dans lequel le déplacement des éléments de transport (4) le long de la voie de transport (2) est produit par une force magnétique, dans lequel au moins un élément magnétisable (44, 46) est également agencé sur les éléments de transport (4), lequel sert à la locomotion des éléments de transport (4) le long de la voie de transport (2),
dans lequel les récipients à transporter sont des bouteilles en plastique ou des préformes en plastique et au moins un élément de travail (6), qui peut être actionné par une énergie électrique et alimenté de façon inductive avec une énergie électrique, est agencé sur au moins un élément de transport (4), dans lequel le déplacement d'au moins un élément de transport est commandé indépendamment du déplacement d'au moins un deuxième élément de transport,
et dans lequel des moyens d'accumulation d'énergie sont prévus sur l'élément de transport (4), lesquels sont chargés de façon inductive, dans lequel les éléments magnétiques (44, 46) des éléments de transport servent à obtenir le déplacement des éléments de transport dans leur ensemble, dans lequel ces éléments magnétiques (44, 46) des éléments de transport sont de préférence des aimants permanents, et les éléments de transport présentent d'autres éléments magnétiques pour le chargement inductif des moyens d'accumulation d'énergie,
dans lequel les éléments de transport (4) individuels présentent un support (42) ainsi qu'un élément de retenue (48) agencé dessus pour retenir les récipients en plastique, et l'élément de travail (6) est un pilote qui pilote l'élément de retenue (48) pour ainsi occasionner une retenue ou un lâcher du récipient,
et dans lequel les moyens d'accumulation d'énergie alimentent les éléments de travail (6) avec une énergie électrique,
dans lequel les éléments magnétiques (22, 24) de la voie de transport servent aussi à l'alimentation électrique de l'élément de travail et les éléments magnétiques (22, 24) de la voie de transport sont alimentés avec une tension génératrice de mouvement par laquelle un déplacement des éléments de transport (4) est occasionné, ainsi qu'avec une tension d'activation qui alimente l'élément de travail avec une énergie électrique.

5. Procédé selon la revendication 4,
**caractérisé en ce qu'**
un premier champ magnétique, occasionnant le déplacement des éléments de transport (4), est transmis dans une première zone prédéfinie par rapport à l'élément de transport (4), et un second champ magnétique, alimentant l'élément de travail (6) avec une énergie électrique, est transmis dans une seconde zone prédéfinie par rapport à l'élément de transport (4), et les deux zones sont décalées l'une par rapport à l'autre.
